# EUROPÄISCHE PATENTSCHRIFT

(11) **EP 2 093 469 B1**
(45) Veröffentlichungstag und Bekanntmachung des Hinweises auf die Patenterteilung: **09.05.2018**
(21) Anmeldenummer: 09150232.8
(22) Anmeldetag: 08.01.2009
(51) Int. Cl.: F16L 37/138, F16L 13/14

(54) **Presshülse**
Press sleeve
Manchon de compression

(30) Priorität: 19.02.2008 DE 102008010084
(43) Veröffentlichungstag der Anmeldung: 26.08.2009
(73) Patentinhaber: Viega Technology GmbH & Co. KG, 57439 Attendorn (DE)
(72) Erfinder: Sinoplu, Sudi, 57439, Attendorn (DE); Rischen, Christian, 59889, Eslohe (DE)
(74) Vertreter: Cohausz & Florack

(56) Entgegenhaltungen:
- EP-A1- 1 288 554
- US-A- 3 191 975
- US-A- 4 212 487
- US-A1- 2004 169 370

## Beschreibung

Die Erfindung betrifft ein Übertragungselement für axial zu verpressende, unlösbare Werkstückverbindungen. Die Erfindung betrifft ferner eine Anordnung zur Herstellung einer unlösbaren Verbindung.

Übertragungselemente bzw. Anordnungen der eingangs genannten Art sind aus dem Stand der Technik bekannt. Eine unlösbare Verbindung, insbesondere zwischen einem Rohr und einem Fitting wird unter Verwendung einer axialen Presstechnik beispielsweise nach einem wie folgt beschriebenen Verfahren hergestellt. Ein profiliertes, insbesondere mit einer bestimmten Anzahl wulstartiger Außenvorsprünge versehenes Übertragungselement wird auf ein Rohrende gesteckt. Das von dem Übertragungselement umgriffene Rohrende wird auf den gegebenenfalls profilierten Stützkörper eines eine Schulter aufweisenden Fittings geschoben, so dass die Stirnflächen des Rohrs und des Übertragungselements an der Schulter anliegen. Anschließend wird eine gegebenenfalls profilierte, beispielsweise Innenwülste aufweisende Überwurf-Presshülse über das von dem Übertragungselement umgriffene Rohrende in Richtung der Schulter des Fittings aufgeschoben. Durch die Interaktion mit der Überwurf-Presshülse werden das Übertragungselement und das Rohrende auf den Stützkörper radial einwärts umgeformt, so dass eine kraftschlüssige, gegebenenfalls auch formschlüssige Verbindung geschaffen wird.

Die europäische Patentanmeldung EP 1 288 554 A1 offenbart beispielsweise eine Anschlussvorrichtung für ein Rohr mit einem Übertragungselement und einer Außenhülse. Das Übertragungselement weist eine durch Rippen modifizierte Innenmantelfläche auf. Bei der Montage wird infolge des Andrucks durch eine aufgeschobene Außenhülse das Rohrende nach innen verformt. Dabei rufen die Rippen eine Lokalisierung der Krafteinwirkung hervor.

Nachteilig an dieser Vorgehensweise ist jedoch, dass durch die wulstartigen Vorsprünge lediglich punktuelle Umformkräfte bewirkt werden, wodurch das Pressergebnis, insbesondere ein für die Dichtheit der unlösbaren Verbindung erforderlicher Formschluss des Rohrs mit dem Stützkörper des Fittings beeinträchtigt werden kann. Um dieser Beeinträchtigung abzuhelfen, kann ein separates Dichtungselement, beispielsweise ein O-Ring zwischen dem Stützkörper und dem Rohrende angeordnet werden. Allerdings werden damit der zur Herstellung der unlösbaren Verbindung erforderliche Aufwand als auch die bei der Herstellung der unlösbaren Verbindung aufzuwendende Sorgfaltsanforderung erhöht.

Ferner schränkt die vorstehend beschriebene Anlage der Stirnflächen des Rohrs und des Übertragungselements an der Schulter des Fittings die Auswahl der Werkstoffe ein, aus welchen das Rohr bzw. das Fitting gefertigt werden können. Handelt es sich bei dem Rohr beispielsweise um ein Metallrohr oder um ein eine Metallschicht aufweisendes Verbundrohr und ist das Fitting in diesem Beispiel aus einem Metall oder einem Werkstoff anderer Art gefertigt, welches bzw. welcher ein von dem Metall des Rohrs abweichendes chemisches Potential hat, kann die Struktur des Rohrs, insbesondere nach dem Pressvorgang durch Kontaktkorrosion, im Falle eines Verbundrohrs für das Auge eines Betrachters gegebenenfalls sogar unsichtbar geschädigt werden.

Die US 2004/0169370 A1 betrifft eine lösbare Rohrverbindung, die mit einer Mutter festgeschraubt wird und dementsprechend wieder gelöst werden kann. Die US 3,191,975 A offenbart eine wiederverwendbare Verbindung für Schläuche. Die US 4,212,487 betrifft eine Schlauchkupplung für hohe Drücke und Temperaturen. Sämtliche dieser Rohrverbindungen sind lösbar und somit nicht für eine dauerhafte und unlösbare Verbindung geeignet.

Der vorliegenden Erfindung liegt daher das technische Problem zu Grunde, ein Übertragungselement und eine Anordnung anzugeben, mit welchem bzw. mit welcher eine dauerhafte unlösbare Verbindung unter Verwendung einer axialen Presstechnik mit einfachen Mitteln herstellbar ist.

Das technische Problem wird durch ein Übertragungselement für axial zu verpressende, unlösbare Werkstückverbindungen mit einem Flanschabschnitt und mit einem Übertragungsabschnitt gelöst, wobei der Übertragungsabschnitt eine im Wesentlichen zylinderförmige Innenumfangsfläche aufweist, so dass ein für eine unlösbare Verbindung vorgesehenes Rohr übertragungsabschnittseitig in das Übertragungselement reibschlüssig einführbar ist, wobei die Wanddicke des Übertragungsabschnitts sich vom dem Flanschabschnitt proximalen Ende bis zum dem Flanschabschnitt distalen Ende verjüngt, wobei die Außenumfangsfläche des Übertragungsabschnitts gegen die Mittelachse des Übertragungselements geneigt ist und an der Innenumfangsfläche des Übertragungsabschnitts mindestens ein in axialer Richtung verlaufender Steg vorgesehen ist.

Die Innenumfangsfläche des Übertragungsabschnitts ist im Wesentlichen zylinderförmig ausgebildet. Dies ist so zu verstehen, dass ein für eine unlösbare Verbindung vorgesehenes Rohr übertragungsabschnittseitig in das Übertragungselement, gegebenenfalls reibschlüssig einführbar sein soll. Da viele Rohre einen kreisförmigen Außenquerschnitt aufweisen, kann daher eine entsprechend angepasste kreiszylinderförmige Ausgestaltung der Innenumfangsfläche des Übertragungsabschnitts zweckmäßig sein. Allerdings kann das Übertragungselement auch für andere Rohraußenquerschnitte, beispielsweise ellipsenförmige oder prismenförmige Querschnitte geeignet ausgestaltet werden. Der Begriff zylinderförmig ist also sehr weit zu verstehen. Insbesondere kann die im Wesentlichen zylinderförmige Innenumfangsfläche durch bauliche Merkmale, welche den zylindrischen Charakter der Fläche, beispielsweise auf Grund ihrer kleinen Dimensionen nur unwesentlich ändern, modifiziert sein.

Durch die Verjüngung der Wanddicke des Übertragungsabschnitts wird vorteilhafter Weise eine Außenumfangsfläche geschaffen, welche in der Wechselwirkung mit einer geeigneten, zum Zwecke der Verpressung betätigten Gleithülse während des Pressvorgangs eine gleichmäßigere Kraftausübung ermöglicht. Auf diese Weise können die Dichtheit einer unlösbaren Verbindung beeinträchtigende Unregelmäßigkeiten im Pressergebnis zwischen dem Stützkörper eines Fittings und einem Rohr vermieden werden. Maßnahmen in Form zusätzlicher Dichtelemente sind dadurch ebenfalls vermeidbar. Darüber hinaus wird durch die gegen die Mittelachse des Übertragungselements geneigte Außenumfangsfläche des Übertragungsabschnitts eine zumindest teilweise Kraftumlenkung von der axialen Richtung in die radial einwärtige Richtung möglich gemacht. Somit ist das erfindungsgemäße Übertragungselement insbesondere für axiale Presstechniken verwendbar.

Der Flanschabschnitt bietet vorteilhafter Weise eine Anlagefläche für die Stirnfläche eines Rohrs, welches in das Übertragungselement eingeführt und mit diesem verpresst werden soll. Damit können insbesondere Materialunverträglichkeiten, beispielsweise in der Form von Kontaktkorrosion, durch eine geeignete Auswahl der Werkstoffe des Flanschabschnitts sowie des Rohrs bzw. Verbundrohrs vermieden werden.

Der Flanschabschnitt und der Übertragungsabschnitt können einstückig ausgebildet sein. Vorzugsweise sind der Flanschabschnitt und der Übertragungsabschnitt über einen, insbesondere mittels einer Ausnehmung gebildeten Brückenabschnitt verbunden. Auf diese Weise kann eine weitgehende Entkopplung des Flanschabschnitts und des Übertragungsabschnitts insbesondere während des Pressvorgangs gewährleistet werden. Durch die Ausnehmung wird die Wanddicke des Übertragungselements zwischen dem Flanschabschnitt und dem Übertragungsabschnitt, also am Brückenabschnitt, verringert, so dass die während des Pressvorgangs von einer Gleithülse auf den Übertragungsabschnitt übertragenen Kräfte lediglich in einer den Flanschabschnitt im Wesentlichen nicht umformenden Stärke auch auf den Flanschabschnitt übertragen werden. Der Flanschabschnitt behält seine Form nach dem Pressvorgang daher im Wesentlichen bei, wohingegen der Übertragungsabschnitt radial einwärts, und gegebenenfalls unter Zusammenstauchung des Brückenabschnitts auch in axialer Richtung auf den Flanschabschnitt zu umgeformt wird.

Alternativ ist es aber auch möglich, den Flanschabschnitt und den Übertragungsabschnitt zweistückig auszubilden. Auf diese Weise kann eine höhere Flexibilität bei der Anordnung der Werkstücke zur Herstellung einer unlösbaren Verbindung aber auch bei der Herstellung der Werkstücke erreicht werden. Insbesondere sind der Flanschabschnitt und der Übertragungsabschnitt mittels Verbindungselementen, insbesondere Steckverbindungselementen verbindbar. Diese Verbindungselemente können beispielsweise Stifte, Vorsprünge und/oder entsprechende Passnuten sein, welche das, insbesondere reibschlüssige Aufstecken des Flanschabschnitts auf den Übertragungsabschnitt oder umgekehrt ermöglichen.

In einer weiteren vorteilhaften Ausgestaltung des Übertragungselements weist der Flanschabschnitt einen radial einwärts ausgreifenden Rastvorsprung auf. Mittels des am Flanschabschnitt angeordneten Rastvorsprungs kann das Übertragungselement mit einem Fitting zumindest kraftschlüssig verbunden werden. Auf diese Weise kann die bauliche Ausgestaltung eines für die Herstellung einer unlösbaren Verbindung erforderlichen Fittings vereinfacht werden. Denn das Fitting selbst muss keine die Pressposition eines Rohrs in axialer Richtung definierende Schulter mehr aufweisen. Vielmehr ist es ausreichend, wenn das Fitting ein zu dem am Flanschabschnitt des Übertragungselements angeordneten Rastvorsprung korrespondierendes Rastelement, beispielsweise eine Rastnut aufweist.

Die Innenumfangsfläche des Flanschabschnitts, insbesondere deren Form bzw. deren Durchmesser können allerdings auch zusätzlich oder alternativ in einer für eine Presspassung mit dem Grundkörper eines Fittings geeigneten Weise ausgestaltet werden. Damit lässt sich eine reibschlüssige Passung des Übertragungselements auf einem Fitting erzielen, welche gegebenenfalls in der Lage ist, das Übertragungselement und das Fitting auch bei während des Pressvorgangs ausgeübten Kräften in einer weitgehend festen Position zueinander zu halten.

An der Innenumfangsfläche des Übertragungsabschnitts ist mindestens ein in axialer Richtung verlaufender Steg vorgesehen. Durch einen radial einwärts von der Innenumfangsfläche des Übertragungsabschnitts ausgreifenden Steg kann der Innenquerschnitt des Übertragungsabschnitts entlang der Erstreckung des Stegs lokal verengt und somit eine zusätzliche Fixierung eines übertragungsabschnittseitig in das Übertragungselement eingeführten Rohrs gegen Drehbewegungen erzielt werden. Werden wenigstens zwei Stege vorgesehen, kann darüber hinaus das in das Übertragungselement eingeführte Rohr zuverlässiger gegenüber der Mittelachse des Übertragungselements zentriert werden. Auf diese Weise lassen sich Fertigungstoleranzen des Außendurchmessers eines eingeführten Rohrs berücksichtigen. Weist der Außendurchmesser eines Rohrs abweichend vom Normaußendurchmesser ein leichtes Untermaß auf, könnte ansonsten bei der Handhabung des in das Übertragungselements eingeführten Rohrs eine ungewünschte Drehbewegung des Rohrs relativ zum Übertragungselement ausgelöst werden, welche den Pressvorgang behindert bzw. erschwert.

Die Innenumfangsfläche des Übertragungsabschnitts kann in der Form eines Mehrkants ausgebildet sein. Auch durch diese bauliche Weiterbildung des erfindungsgemäßen Übertragungselements kann eine ungewünschte Drehbewegung eines eingeführten Rohrs gehemmt werden.

Vorzugsweise ist die Außenumfangsfläche des Übertragungsabschnitts kegelsegmentförmig ausgebildet. Auf diese Weise wird insbesondere die Herstellung des Übertragungsabschnitts und gegebenenfalls die Herstellung von Werkstücken, beispielsweise Gleithülsen, mit auf diese Übertragungsabschnitte angepassten Interaktionsflächen, welche gemeinsam für die mittels axialer Presstechnik vorgenommene Herstellung einer unlösbaren Verbindung vorgesehen sind, vereinfacht. Dadurch kann ein hohes Maß an Kompatibilität zwischen den Gleithülsen und den Übertragungselementen erreicht werden.

Insbesondere kann der Neigungswinkel der Außenumfangsfläche des Übertragungsabschnitts relativ zur Mittelachse zwischen 5° und 15°, insbesondere 10° betragen. Durch diese Ausgestaltung kann insbesondere die Stabilität der Anordnung während des Pressvorgangs gefördert werden. Denn eine Gleithülse mit entsprechend angepasster Innenkontur kann so behutsam aber mit stetig steigender Kraftausübung auf den Übertragungsabschnitt geführt werden, was der Güte des Pressergebnisses zu Gute kommt.

Vorzugsweise ist am dem Flanschabschnitt proximalen Ende des Übertragungsabschnitts und/oder am Brückenabschnitt mindestens eine Öffnung vorgesehen. Die Öffnung ermöglicht es einem Verwender, den empfohlenen, gegebenenfalls vorgeschriebenen Eingriff des Rohrendes in das Übertragungselement zu kontrollieren. Je nach Ausmaß der durch den Pressvorgang bewirkten Umformung kann die Kontrolle sowohl vor als auch nach dem Pressvorgang durchführbar sein. Weist die Öffnung eine Längserstreckung in Umfangsrichtung auf, kann sie darüber hinaus die Entkopplung des Flanschabschnitts und des Übertragungsabschnitts fördern. Denn an der Öffnung zwischen Flanschabschnitt und Übertragungsabschnitt werden keine auf den Übertragungsabschnitt übertragenen Kräfte an den Flanschabschnitt weitergeleitet. Die Beanspruchung des Flanschabschnitts während des Pressvorgangs kann dadurch zusätzlich verringert werden.

In einer weiteren vorteilhaften Ausgestaltung des Übertragungselements kann die Außenumfangsfläche des Flanschabschnitts an der Stirnseite eine Fase aufweisen. Auf diese Weise lässt sich insbesondere eine Interaktionsfläche für Presswerkzeuge schaffen, welche mittels einer radial einwärtigen Bewegung betätigt werden. Liegt an der Fase beispielsweise ein Abschnitt einer Pressbacke, welcher einen entsprechenden Neigungswinkel relativ zur Mittelachse des Übertragungselements aufweist, an, kann die durch die radial einwärtige Bewegung bewirkte Dynamik zumindest teilweise in eine in axialer Richtung wirkende Presskraft umgelenkt werden.

Somit können für die Verpressung in axialer Richtung Werkzeuge verwendet werden, welche eigentlich für die Verpressung in radial einwärtiger Richtung konzipiert wurden. Auf diese Weise können derartigen Werkzeugen innewohnende Vorteile wie geringe räumliche Abmessungen und/oder geringes Gewicht ausgenutzt werden.

Weiterhin ist die Außenumfangsfläche des Übertragungsabschnitts und/oder die Fase des Flanschabschnitts bevorzugter Weise gleitfördernd ausgebildet. Auf diese Weise kann der Pressvorgang erleichtert werden. Die Außenumfangsfläche und/oder die Fase gleitfördernd auszubilden, kann auf unterschiedliche Weise geschehen. Es ist möglich, die entsprechenden Abschnitte des Flanschabschnitts oder Übertragungsabschnitts zweiteilig auszubilden, und die Flächen aus einem Material wie Polytetrafluorethylen oder ähnlichem zu fertigen. Es ist allerdings auch möglich, das Gleitvermögen mittels einer gleitfördernden Beschichtung der Flächen, beispielsweise mit einer Gleitlackbeschichtung zu erhöhen.

An der Stirnfläche des Flanschabschnitts kann eine den Rastvorsprung hinterschneidende, insbesondere ringförmige Ausnehmung vorgesehen sein. Durch die Hinterschneidung wird insbesondere die Biegsamkeit des Rastvorsprungs gefördert, so dass der Rastvorsprung die Wände einer dazu korrespondierenden Rastnut am Grundkörper eines Fittings leichter überwinden und in der Art eines Schnappverschlusses einrasten kann. Darüber hinaus wird durch das Einarbeiten der Hinterschneidung Material des Übertragungselements entfernt, wodurch das Gewicht des Übertragungselements reduziert wird.

In einer weiteren vorteilhaften Ausgestaltung des Übertragungselements ist der Rastvorsprung an der der Stirnseite des Flanschabschnitts zugewandten Seite angeschrägt. Auf diese Weise kann die Herstellung eines Eingriffs des Rastvorsprungs in eine an einem Fitting angeordnete Rastnut, insbesondere mittels einer Bewegung in axialer Richtung erleichtert werden.

Weiterhin kann die Innenumfangsfläche des Rastvorsprungs in der Form eines Mehrkants ausgebildet sein. Auf diese Weise lassen sich ungewünschte Drehbewegungen des Flanschabschnitts bzw. des Übertragungselements relativ zu dem Fitting, wenn der Rastvorsprung und die Rastnut in Eingriff stehen, vermeiden. Zusätzlich oder alternativ können natürlich auch Drehsicherungsstege, gegebenenfalls auch Drehsicherungswülste an der Innenumfangsfläche des Rastvorsprungs vorgesehen werden. Dadurch lässt sich die Anfälligkeit gegenüber Drehbewegungen ebenfalls mindern.

Vorzugsweise ist das Übertragungselement aus einem bis zu einer Temperatur von 95°C, insbesondere 85°C formstabilen, wärmebeständigen Kunststoff gefertigt. Insbesondere kommen Kunststoffe aus der Gruppe der Polysulfone oder Polyphenylsulfone, aus der Gruppe der thermisch stabilisierten, insbesondere faserverstärkten Polyamide oder Polyvinylidenfluorid in Betracht. Durch die Verwendung derartiger Materialien erfüllen die Übertragungselemente die Anforderungen, wie sie an unlösbare Verbindungen im Trinkwasser- oder Heizungsinstallationsbereich gestellt werden. Die vorstehend genannten Werkstoffe weisen vorteilhafte Umformeigenschaften und eine geringe Neigung zu Kontaktkorrosion auf. Übertragungselemente aus diesen Materialien sind daher insbesondere für die Verwendung mit Rohren aus einem Metallwerkstoff oder für die Verwendung mit eine Schicht aus einem Metallwerkstoff umfassenden Verbundrohren geeignet.

Gemäß einer weiteren Lehre der vorliegenden Erfindung wird das technische Problem auch durch eine Anordnung zur Herstellung einer unlösbaren Verbindung mit einem Fitting, wobei das Fitting einen ein Profil aufweisenden Stützkörper und einen Grundkörper aufweist, mit einem Übertragungselement, wobei das Übertragungselement einen Flanschabschnitt und einen eine im Wesentlichen zylinderförmige Innenumfangsfläche aufweisenden Übertragungsabschnitt, wobei die Wanddicke des Übertragungsabschnitts sich vom dem Flanschabschnitt proximalen Ende bis zum dem Flanschabschnitt distalen Ende verjüngt und wobei die Außenumfangsfläche des Übertragungsabschnitts gegen die Mittelachse des Übertragungselements geneigt ist, aufweist, und mit einer Gleithülse, wobei die Kontur der Innenumfangsfläche der Gleithülse an die Kontur der Außenumfangsfläche des Übertragungsabschnitts angepasst ist, wobei das Übertragungselement den Stützkörper und zumindest teilweise den Grundkörper umgreift, wobei die Gleithülse teilweise auf den Übertragungsabschnitt aufgeschoben ist, und wobei die Innenumfangsfläche der Gleithülse und die Außenumfangsfläche des Übertragungsabschnitts zumindest teilweise in reibschlüssiger Anlage liegen, gelöst.

Das Übertragungselement und das Fitting können beispielsweise mittels einer Presspassung in einer reibschlüssigen Anlage liegen.

Es ist jedoch auch möglich, den Flanschabschnitt mit einem radial einwärts ausgreifenden Rastvorsprung und den Grundkörper des Fittings mit einer Rastnut zu versehen. In diesem Fall ermöglicht das Fitting durch einen Eingriff des am Flanschabschnitt des Übertragungselements angeordneten Rastvorsprungs in die am Fittinggrundkörper angeordnete Rastnut eine Verriegelung des Übertragungselements mit dem Fitting in axialer Richtung. Auf diese Weise können das Fitting und das Übertragungselement vor dem Pressvorgang in einer definierten Position gehalten werden. Darüber hinaus ist es nicht mehr notwendig, das Fitting mit einer als Anlage für die Stirnflächen der anderen zu verpressenden Werkstücke dienenden Schulter zu versehen. Insbesondere die Anforderungen an die Fertigung des Fittings werden damit vereinfacht.

Es versteht sich von selbst, dass das Fitting außer dem für einen Rohranschluss vorgesehenen Stützkörper auch Anschlussabschnitte anderer, grundsätzlich beliebiger Art aufweisen kann. So kann das Fitting beispielsweise auch ein Ventil, einen Kugelhahn oder eine ähnliche Armatur bzw. mehrere ähnliche Armaturen umfassen. Im einfachsten Beispielsfall weist das Fitting jedoch lediglich zwei einen Stützkörper umfassende Rohranschlüsse auf.

Der Stützkörper weist an seiner Außenumfangsfläche vorzugsweise ein Profil auf, welches dem im Zuge des Pressvorgangs umgeformten, und gegebenenfalls verdrängten Material eines zu verpressenden Rohrs ein Volumen bietet, in welches es fließen kann. Das Profil des Stützkörpers kann beispielsweise mehrere durch ringförmig umlaufende Trennstege begrenzte ringförmig umlaufende Nuten aufweisen.

Die Kontur der Innenumfangsfläche der Gleithülse ist bevorzugter Weise an die Kontur der Außenumfangsfläche des Übertragungsabschnitts angepasst. Ist die Außenumfangsfläche des Übertragungsabschnitts beispielsweise kegelsegmentförmig ausgebildet, weist die Innenumfangsfläche der Gleithülse eine daran entsprechend angepasste Kegelsegmentform auf. Auf diese Weise kann eine gleichmäßige Kraftübertragung von der Gleithülse auf das Übertragungselement erzielt werden, was die Stabilität der Anordnung der Werkstücke während des Pressvorgangs fördert.

Insbesondere kann durch die erfindungsgemäße Anordnung ein System aus Werkstücken geschaffen werden, welches für einen Verwender im Handel erhältlich ist. Der Verwender hat also lediglich darauf zu achten, dass die Form des Außenquerschnitts und/oder der Außendurchmesser der von ihm zu verpressenden Rohre zu den jeweiligen Abmessungen des Fittings, beispielsweise des Stützkörpers bzw. des Übertragungselements, beispielsweise des Übertragungsabschnitts passend sind.

Vorzugsweise ist die Wand der Gleithülse im Querschnitt im Wesentlichen keilförmig ausgebildet. Dadurch wird insbesondere das Aufschieben der Gleithülse auf den Übertragungsabschnitt des Übertragungselements vereinfacht.

Ferner kann die Gleithülse an ihrem breiten Ende eine, insbesondere gleitfördernd ausgebildete Fase aufweisen. Auf diese Weise lässt sich insbesondere eine Interaktionsfläche für Presswerkzeuge schaffen, welche mittels einer radial einwärtigen Bewegung betätigt werden. Somit können für die Verpressung in axialer Richtung Werkzeuge verwendet werden, welche eigentlich für die Verpressung in radial einwärtiger Richtung konzipiert wurden. Auf diese Weise können derartigen Werkzeugen innewohnende Vorteile wie geringe räumliche Abmessungen und/oder geringes Gewicht ausgenutzt werden. Durch die gleitfördernde Ausbildung der Fase lässt sich der Pressvorgang erleichtern.

Hinsichtlich weiterer Vorteile der erfindungsgemäßen Anordnung zur Herstellung einer unlösbaren Verbindung wird auf die Ausführungen zum erfindungsgemäßen Übertragungselement verwiesen.

Im Folgenden wird die Erfindung an Hand von in einer Zeichnung dargestellten Ausführungsbeispielen näher erläutert. In der Zeichnung zeigen:
- Fig. 1a-f: in einer Querschnittsansicht ein beispielhaftes Verfahren zur Herstellung einer unlösbaren Verbindung unter Verwendung einer beispielhaften Anordnung aus einem Fitting, einem Ausführungsbeispiel des erfindungsgemäßen Übertragungselements, einer Gleithülse sowie einem Rohr,
- Fig. 2a-c: ein Ausführungsbeispiel des erfindungsgemäßen Übertragungselements in drei isometrischen Ansichten und
- Fig. 3: eine beispielhafte Variante des in den Fig. 1a-f gezeigten Verfahrens.

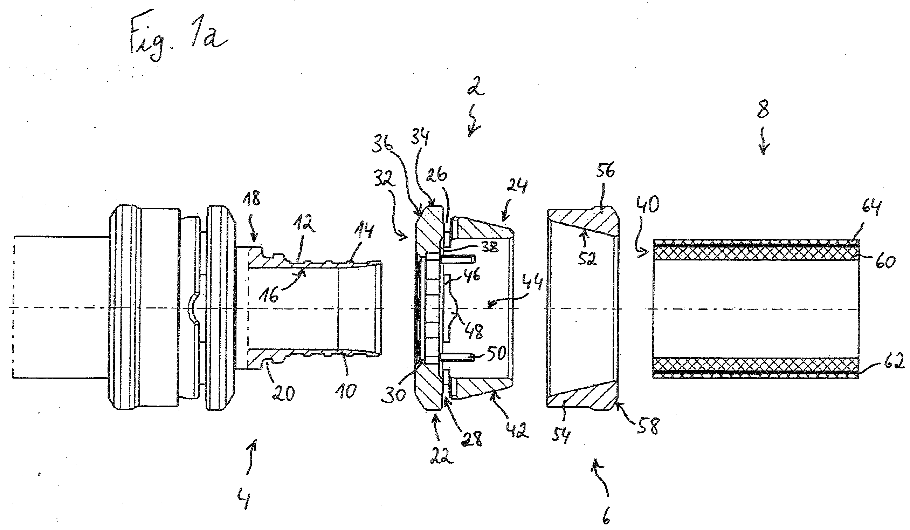

Im Folgenden wird unter Bezugnahme auf die Fig. 1a-f beispielhaft ein axiales Pressverfahren erläutert, in welchem ein Ausführungsbeispiel des erfindungsgemäßen Übertragungselements 2 Verwendung findet.

Fig. 1a zeigt in einer Querschnittsansicht vier Werkstücke: ein Fitting 4, ein Übertragungselement 2, eine Gleithülse 6 und ein Rohr 8.

Das Fitting 4 weist einen ein Profil aufweisenden Stützkörper 10 auf. Das Profil besteht in diesem speziellen Beispiel aus vier ringförmig umlaufenden Nuten 12, welche durch drei dazwischen angeordnete, ringförmig umlaufende Trennstege 14 voneinander abgegrenzt sind. Die Innenumfangsfläche 16 des Stützkörpers 10 ist im Wesentlichen zylinderförmig ausgebildet, wobei jedoch die Stützkörperwände am distalen Ende des Stützkörpers 10 radial auswärts leicht angeschrägt sind, um den Querschnittsübergang stetig zu gestalten. Der Stützkörper 10 erstreckt sich in diesem Beispiel von einem Grundkörper 18, welcher an der Außenumfangsfläche eine ringförmig umlaufende Rastnut 20 aufweist.

Dem Fitting 4 in Fig. 1a vorgeordnet ist ein Übertragungselement 2 gemäß der vorliegenden Erfindung. Das Übertragungselement 2 weist in diesem speziellen Beispiel einen dem Fitting 4 zugewandten Flanschabschnitt 22, einen Übertragungsabschnitt 24 und einen zwischen dem Flanschabschnitt 22 und dem Übertragungsabschnitt 24 mittels einer Ausnehmung 26 gebildeten Brückenabschnitt 28 auf. An der Innenumfangsfläche weist der Flanschabschnitt 22 in diesem Ausführungsbeispiel einen radial einwärts ausgreifenden Rastvorsprung 30 auf, welcher an der der Stirnseite 32 des Flanschabschnitts 22 zugewandten Seite leicht angeschrägt ist. Der Rastvorsprung 30 ist insbesondere so ausgebildet, dass er in die an dem Fitting 4, welches hier beispielhaft gezeigt ist, angeordnete Rastnut 20 eingreifen und eine axiale Verriegelung bewirken kann. In dem in Fig. 1a gezeigten Ausführungsbeispiel des Übertragungselements 2 ist an der Außenumfangsfläche 34 des Flanschabschnitts 22 an der Stirnseite darüber hinaus eine Fase 36 angeordnet, welche als Interaktionsfläche mit einem Presswerkzeug (nicht gezeigt) dienen kann. Ferner weist der Flanschabschnitt 22 an seinem radial einwärts ausgreifenden Bereich eine zum Übertragungsabschnitt 24 geöffnete Anlageausnehmung 38 auf, an welcher die Stirnfläche 40 eines Rohrs 8 in Anlage kommen kann. Die Innenumfangsfläche des Flanschabschnitts 22 ist in diesem Beispiel als Mehrkant ausgebildet. Auf diese Weise kann in der Wechselwirkung mit der der Innenumfangsfläche des Flanschabschnitts 22 gegenüberliegenden Außenumfangsfläche des Fittinggrundkörpers 18 eine zusätzliche Sicherung gegen unerwünschte Drehbewegungen des Übertragungselements 2 relativ zum Fitting 4 erreicht werden.

Der Übertragungsabschnitt 24 des Übertragungselements 2 weist eine sich vom dem Flanschabschnitt 22 proximalen Ende bis zum dem Flanschabschnitt 22 distalen Ende verjüngende Wanddicke auf. In diesem speziellen Ausführungsbeispiel ist die Außenumfangsfläche 42 des Übertragungsabschnitts 24 als Kegelsegmentfläche ausgebildet, welche unter einem Winkel von etwa 10° gegen die Mittelachse 44 des Übertragungselements 2 geneigt ist. Es ist jedoch auch möglich, einen Winkel von 5° bis 15° oder sogar über dieses Intervall hinaus zu wählen, wenn es zweckmäßig ist. In der Querschnittsansicht weist die Wand des Übertragungsabschnitts 24 also im Wesentlichen Keilform auf.

Mittels einer radial einwärts greifenden Ausnehmung 26 ist in dem in Fig. 1a dargestellten Ausführungsbeispiel zwischen dem Flanschabschnitt 22 und dem Übertragungsabschnitt 24 ein Brückenabschnitt 28 gebildet, so dass der Flanschabschnitt 22 und der Übertragungsabschnitt 24 einstückig miteinander verbunden sind. Es ist jedoch auch möglich, den Flanschabschnitt 22 und den Übertragungsabschnitt 24 zweistückig auszubilden. Insbesondere kann es sich bei dem Flanschabschnitt 22 und bei dem Übertragungsabschnitt 24 um voneinander trennbare Werkstücke handeln, welche mittels geeigneter Verbindungselemente (nicht dargestellt), beispielsweise Steckverbindungselemente wie Stifte, Federn und/oder Passnuten, insbesondere reibschlüssig miteinander verbindbar sind. Der Brückenabschnitt 28 weist in diesem Beispiel vier Öffnungen 46 auf, welche eine im Wesentlichen in Umfangsrichtung verlaufende Erstreckung und, zusätzlich, eine in den Übertragungsabschnitt 24 reichende Ausbuchtung 48 aufweisen. Die Öffnungen 46 ermöglichen einem Verwender eine visuelle Kontrolle der Position der Werkstücke vor und gegebenenfalls nach dem Pressvorgang. Die Öffnungen 46 können natürlich auch eine andere Form aufweisen bzw. an einer anderen Stelle, beispielsweise ausschließlich an dem Übertragungsabschnitt 24 angeordnet sein. Auch die Anzahl der Öffnungen 46 kann grundsätzlich frei gewählt werden.

Ferner sind an der Innenumfangsfläche des Brückenabschnitts 28 und des Übertragungsabschnitts 24 vier in axialer Richtung verlaufende Stege 50 vorgesehen, welche den Innenquerschnitt des Übertragungselements 2 am Übertragungsabschnitt 24, und in diesem Beispiel auch am Brückenabschnitt 28, lokal leicht verengen und damit eine Sicherung gegen unerwünschte Drehbewegungen eines in das Übertragungselement 2 eingeführten Rohrs 8 relativ zu dem Übertragungselement 2 gewährleisten. Die Stege 50 erstrecken sich gemäß Fig. 1a vom Übertragungsabschnitt 24 bis zum Brückenabschnitt 28. Es ist natürlich auch möglich, die Stege 50 lediglich am Übertragungsabschnitt 24 vorzusehen, um den gewünschten drehhemmenden Effekt zu erhalten. Die Anzahl der Stege 50 kann grundsätzlich frei gewählt werden. Als Drehsicherung kann zusätzlich oder alternativ zu den Stegen 50 eine Ausbildung der Innenumfangsfläche des Übertragungsabschnitts 24 und/oder Brückenabschnitts 28 als Mehrkant (nicht gezeigt) vorgesehen sein.

Das Übertragungselement 2 kann aus einem Polysulfon, Polyphenylsulfon oder thermisch stabilisierten, insbesondere faserverstärkten Polyamid hergestellt sein. Natürlich sind auch andere Materialien denkbar, beispielsweise Polyvinylidenfluorid.

Weiterhin zeigt Fig. 1a eine Gleithülse 6 mit einer Innenumfangsfläche 52, welche als Interaktionsfläche mit der Außenumfangsfläche 42 des Übertragungsabschnitts 24 ausgebildet ist und daher in diesem speziellen Beispiel die Form eines Hohlkegelsegments aufweist. Der Neigungswinkel der Kegelsegmentfläche relativ zur Mittelachse 44 ist dementsprechend an den Neigungswinkel der Außenumfangsfläche 42 des Übertragungsabschnitts 24 angepasst. In der Querschnittsansicht weist die Wand 54 der Gleithülse 6 im Wesentlichen Keilform auf. Diese Keilform wird lediglich durch einen flanschartigen Vorsprung 56 am breiten Ende des Keils, mit anderen Worten an der von dem Übertragungselement 2 abgewandten Seite der Gleithülse 6, modifiziert. Darüber hinaus weist die Gleithülse 6 an ihrem breiten Ende, mit anderen Worten an dem Ende, an dem die Wand 54 die größte Dicke aufweist, eine Fase 58 auf, an welcher beispielsweise ein Presswerkzeug (nicht gezeigt) angreifen kann.

Das letzte Werkstück in der in Fig. 1a dargestellten Anordnung ist in diesem Ausführungsbeispiel ein Verbundrohr 8, welches drei Schichten 60, 62, 64 umfasst. Zum Beispiel kann die innere Schicht 60 aus einem vernetzten Polyethylen (PEX), die mittlere Schicht 62 aus einem Metall wie Aluminium und die äußere Schicht 64 aus einem insbesondere mechanischen Beanspruchungen widerstehenden oder auch ästhetischen Gesichtspunkten genügenden Kunststoff bestehen. Das Verbundrohr 8 ist jedoch nur als Beispiel zu verstehen. Selbstverständlich könnte die in Fig. 1a gezeigte Anordnung auch ein einschichtiges Rohr, beispielsweise aus einem Kunststoff oder einem Metall bzw. Metallwerkstoff umfassen. Auch der Querschnitt des Rohrs 8 ist grundsätzlich nicht beschränkt. Entscheidend ist, dass die relevanten Durchmesser der Werkstücke, also der Außendurchmesser des Stützkörpers 10 des Fittings 4 und der Innendurchmesser des Rohrs 8 bzw. der Außendurchmesser des Rohrs 8 und der Innendurchmesser des Übertragungsabschnitts 24 des Übertragungselements 2 füreinander geeignet bzw. aufeinander angepasst sind.

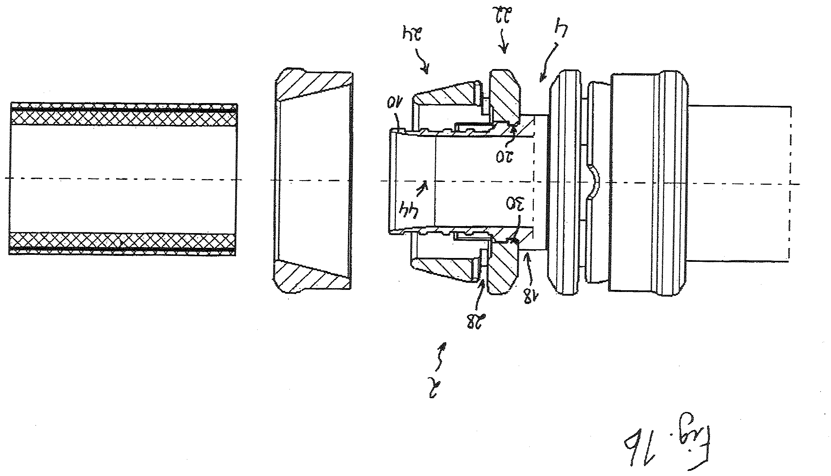

Die in Fig. 1b gezeigte Anordnung unterscheidet sich von der in Fig. 1a dargestellten dadurch, dass das Übertragungselement 2 auf das Fitting 4 aufgesteckt ist bzw. dass das Fitting 4 in das Übertragungselement 2 eingreift. Der an dem Flanschabschnitt 22 angeordnete Rastvorsprung 30 steht dabei mit der an dem Fittinggrundkörper 18 angeordneten Rastnut 20 in Eingriff und verhindert dadurch eine axiale Bewegung. Axiale Bewegungen könnten zusätzlich oder alternativ auch durch eine Presspassung der beiden Werkstücke vermieden werden. In dem in Fig. 1b gezeigten Ausführungsbeispiel wird der Fittinggrundkörper 18 im Wesentlichen von dem Flanschabschnitt 22 und der Stützkörper 10 im Wesentlichen von dem Brückenabschnitt 28 und dem Übertragungsabschnitt 24 umgriffen, wobei das distale Ende des Stützkörpers 10 übertragungsabschnittseitig aus dem Übertragungselement 2 herausragt. Diese Ausgestaltung ist jedoch nicht zwingend. Ebenso ist denkbar, dass das distale Ende des Stützkörpers 10 und das distale Ende des Übertragungsabschnitts 24 etwa in der gleichen Perpendikularebene zur Mittelachse 44 zu liegen kommen oder dass das distale Ende des Übertragungsabschnitts 24 den Stützkörper 10 sogar überragt. Es kann also eine Ausgestaltung gewählt werden, wie sie für die vorgesehene Anwendung zweckmäßig ist.

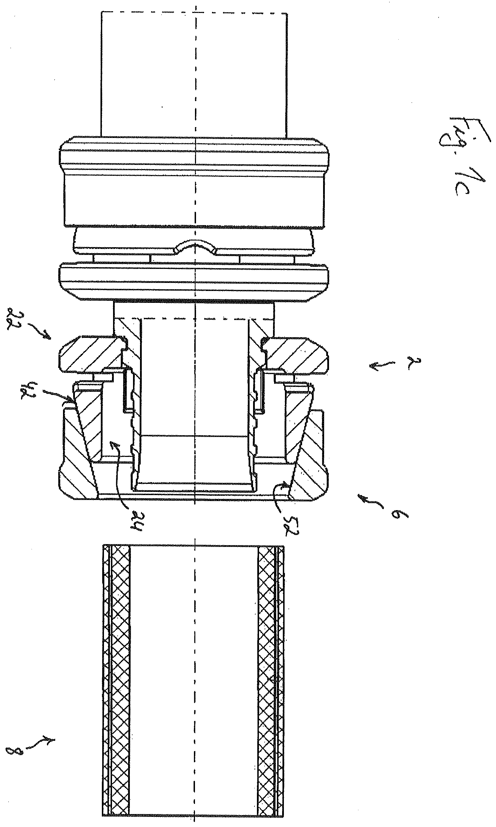

Die in Fig. 1c gezeigte Anordnung unterscheidet sich von der in Fig. 1b dargestellten dadurch, dass die Gleithülse 6 übertragungsabschnittseitig auf das Übertragungselement 2 aufgesteckt ist, wobei die Innenumfangsfläche 52 der Gleithülse 6 und die Außenumfangsfläche 42 des Übertragungsabschnitts 24, welche aufeinander angepasst sind, zumindest abschnittsweise in einer reibschlüssigen Anlage sind. Die Gleithülse 6 ist in diesem speziellen Ausführungsbeispiel in Relation zum Übertragungsabschnitt 24 so ausgebildet, dass die Innenumfangsfläche 52 der Gleithülse 6 und die Außenumfangsfläche 42 des Übertragungsabschnitts 24 zum Bewirken der reibschlüssigen Anlage noch nicht vollflächig in Kontakt sind. Durch die Distanz zwischen dem dem Flanschabschnitt 22 zugewandten Gleithülsenende und dem Flanschabschnitt 22 wird im Wesentlichen die Strecke festgelegt, über welche die Gleithülse 6 gegen den Flanschabschnitt 22 zu pressen ist, um den Pressvorgang zu vollenden und die unlösbare Verbindung herzustellen. Andere bauliche Ausgestaltungen der Gleithülse 6 sind jedoch auch denkbar. Insbesondere ist die Form bzw. Kontur der Außenumfangsfläche der Gleithülse 6 kaum Einschränkungen unterworfen.

Fig. 1c zeigt somit eine erfindungsgemäße Anordnung zur Herstellung einer unlösbaren Verbindung, wie sie ein Verwender im Handel erwerben kann, und welche nur noch um ein zu verpressendes Rohr 8 zu ergänzen ist, um den Pressvorgang vorzunehmen zu können.

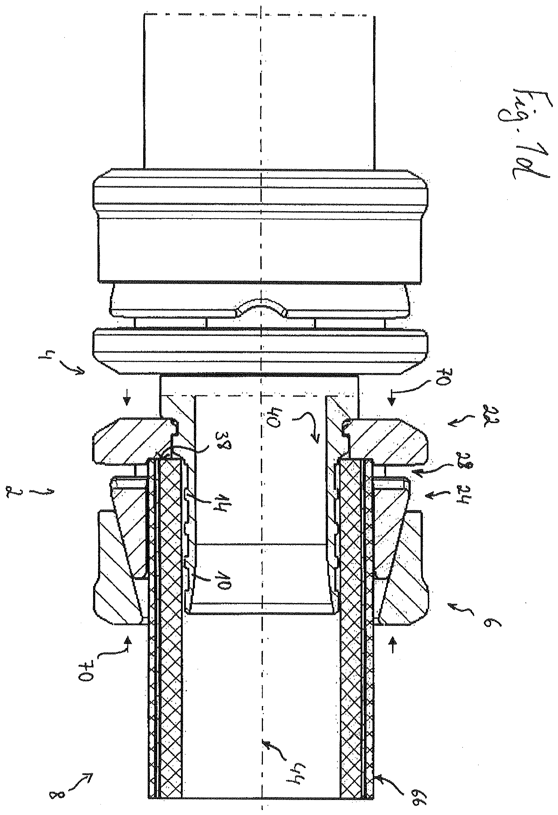

Fig. 1d zeigt die aus den Fig. 1a-c bekannte Anordnung, bei der das Rohr 8 in den Hohlraum zwischen dem Stützkörper 10 des Fittings 4 und dem Übertragungsabschnitt 24 des Übertragungselements 2 eingeführt ist. Das Rohrinnere kann dabei an der Außenumfangsfläche der Trennstege 14, insbesondere reibschlüssig anliegen. Die Stirnfläche 40 des Rohrs 8 ist bis zum Anschlag an die am Flanschabschnitt 22 des Übertragungselements 2 angeordnete Anlageausnehmung 38 herangeschoben. Die Außenumfangsfläche 66 des Rohrs 8 ist in diesem speziellen Ausführungsbeispiel in reibschlüssiger Anlage an der Innenumfangsfläche der vier an der Innenumfangsfläche des Übertragungsabschnitts 24 angeordneten, axial verlaufenden Stege 50 (nicht sichtbar), so dass das Rohr 8 drehgehemmt und weitgehend gegenüber der Mittelachse 44 zentriert liegt. Durch die am Brückenabschnitt 28 und am Übertragungsabschnitt 24 teilweise ausgebuchteten Öffnungen 46 (nicht sichtbar) kann der Verwender in der in Fig. 1d gezeigten Anordnung die ordnungsgemäße Position der Werkstücke 2, 4, 6, 8 zueinander kontrollieren.

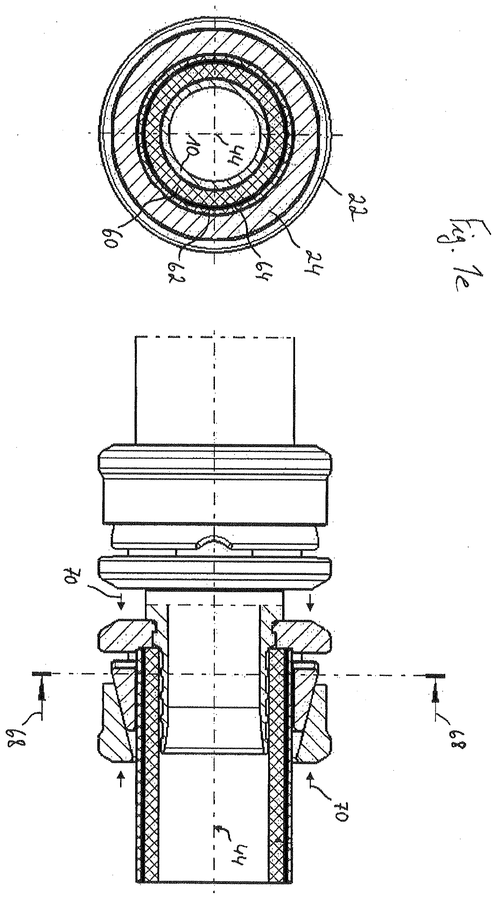

Fig. 1e zeigt die aus Fig. 1d bekannte Anordnung, wobei eine Querschnittsansicht entlang einer zur Mittelachse 44 gelegenen Perpendikularebene (Blickrichtung entlang der Pfeile 68) die Anordnung des Fittings 4, insbesondere des Stützkörpers 10, des Übertragungselements 2, insbesondere des Flanschabschnitts 22 und des Übertragungsabschnitts 24, der Gleithülse 6 und des Rohrs 8, insbesondere der inneren Schicht 60, mittleren Schicht 62 und äußeren Schicht 64, weiter veranschaulicht.

Um die unlösbare Verbindung herzustellen, können nun an den durch die in den Fig. 1d und 1e dargestellten, parallel zur Mittelachse 44 verlaufenden Pfeile 70 Presskräfte ausgeübt werden.

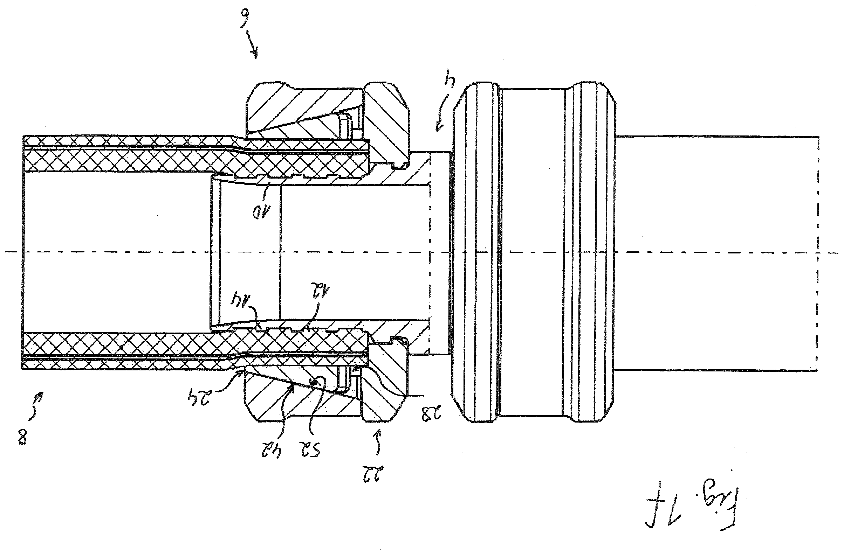

Das Ergebnis des Pressvorgangs ist in Fig. 1f gezeigt. Durch die Ausübung der Presskräfte wird die Gleithülse 6 über den Übertragungsabschnitt 24 in axialer Richtung auf den Flanschabschnitt 22 zu bewegt. Über die an dem Übertragungsabschnitt 24 und an der Gleithülse 6 angeordneten Interaktionsflächen 42, 52 kann eine weitgehend gleichmäßige Presskraftübertragung gewährleistet werden. Durch die Neigung der Innenumfangsfläche 52 der Gleithülse 6 und der korrespondierenden Außenumfangsfläche 42 des Übertragungsabschnitts 24 wird die in diesem speziellen Ausführungsbeispiel in axialer Richtung ausgeübte Dynamik der Pressbewegung zumindest teilweise in radial einwärtige wirkende Presskräfte umgelenkt. Der Übertragungsabschnitt 24 überträgt die Presskräfte auf das Rohr 8, welches radial einwärts so umgeformt wird, dass die durch die Trennstege 14 separierten Nuten 12 am Stützkörper 10 des Fittings 4 das verdrängte Material des Rohrs 8 aufnehmen, und somit ein Kraft- und Formschluss entstehen kann. In der Endposition nach dem Pressvorgang liegt eine Stirnfläche der Gleithülse 6 an dem Flanschabschnitt 22 in Anlage. Der Brückenabschnitt 28 ist in diesem Beispiel lediglich in radialer Richtung umgeformt worden, seine axiale Ausdehnung gleicht im Wesentlichen der Ausdehnung vor dem Pressvorgang. Der Brückenabschnitt 28 wird von dem dünnwandigen Ende der Gleithülse 6 überdeckt. Es ist jedoch auch möglich, den Pressvorgang so weit zu betreiben, dass der Brückenabschnitt 28 in axialer Richtung vollständig zusammengestaucht wird, wenn dies zweckmäßig ist.

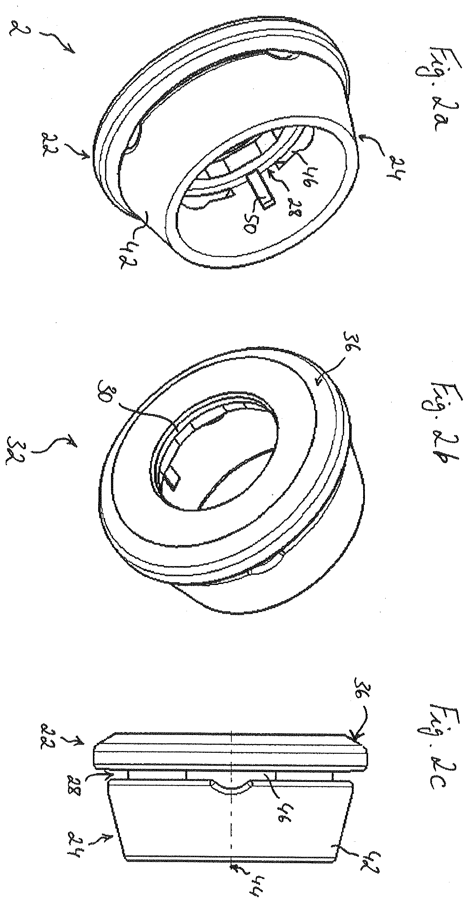

Die Fig. 2a-c zeigen das in den Fig. 1a-f dargestellte, spezielle Ausführungsbeispiel des erfindungsgemäßen Übertragungselements 2 in drei isometrischen Ansichten. An der Stirnfläche 32 des Flanschabschnitts 22 kann eine den Rastvorsprung 30 hinterschneidende, insbesondere ringförmige Ausnehmung (nicht gezeigt) vorgesehen sein. Durch die Hinterschneidung wird insbesondere die Biegsamkeit des Rastvorsprungs 30 gefördert.

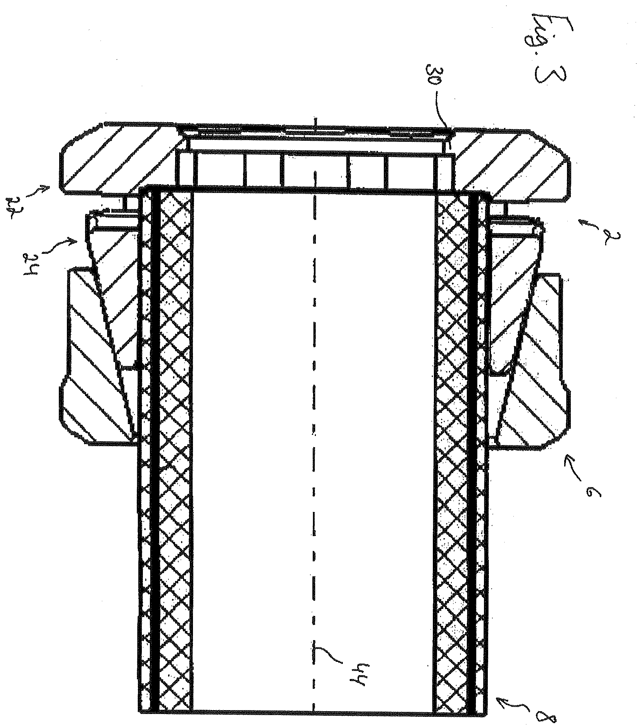

Fig. 3 zeigt eine Anordnung, welche ein Übertragungselement 2, eine Gleithülse 6 und ein Verbundrohr 8 aufweist. Fig. 3 soll verdeutlichen, dass es ebenso möglich ist, das Übertragungselement 2 und die mit diesem in reibschlüssiger Anlage stehende Gleithülse 6 erst auf das Rohr 8 aufzuschieben, bevor die Anordnung dieser drei Werkstücke 2, 6, 8 auf ein wie zuvor beschriebenes Fitting 4 aufgesteckt und dann der Pressvorgang durchgeführt wird. Die Reihenfolge der verschiedenen Verfahrensschritte ist demnach nicht auf das in den Fig. 1a-f dargestellte Beispiel beschränkt.

## Patentansprüche

1. Übertragungselement (2) für axial zu verpressende unlösbare Werkstückverbindungen,
- mit einem Flanschabschnitt (22) mit einer Anlagefläche für eine Stirnfläche eines Rohrs, welches in das Übertragungselement eingeführt und mit dem Übertragungselement verpresst werden kann, und
- mit einem Übertragungsabschnitt (24),
- wobei der Übertragungsabschnitt (24) eine im Wesentlichen zylinderförmige Innenumfangsfläche aufweist, so dass ein für eine unlösbare Verbindung vorgesehenes Rohr übertragungsabschnittseitig in das Übertragungselement reibschlüssig einführbar ist,
- wobei die Wanddicke des Übertragungsabschnitts (24) sich vom dem Flanschabschnitt (22) proximalen Ende bis zum dem Flanschabschnitt (22) distalen Ende verjüngt und
- wobei die Außenumfangsfläche des Übertragungsabschnitts (24) gegen die Mittelachse des Übertragungselements (2) geneigt ist,
**dadurch gekennzeichnet,**
- **dass** an der Innenumfangsfläche des Übertragungsabschnitts (24) mindestens ein in axialer Richtung verlaufender Steg (50) vorgesehen ist.

2. Übertragungselement nach Anspruch 1,
**dadurch gekennzeichnet,**
**dass** der Flanschabschnitt (22) und der Übertragungsabschnitt (24) einstückig ausgebildet und über einen, insbesondere mittels einer Ausnehmung (26) gebildeten Brückenabschnitt (28) verbunden sind.

3. Übertragungselement nach Anspruch 1,
**dadurch gekennzeichnet,**
**dass** der Flanschabschnitt (22) und der Übertragungsabschnitt (24) zweistückig ausgebildet sind.

4. Übertragungselement nach Anspruch 3,
**dadurch gekennzeichnet,**
**dass** der Flanschabschnitt (22) und der Übertragungsabschnitt (24) mittels Verbindungselementen, insbesondere Steckverbindungselementen verbindbar sind.

5. Übertragungselement nach einem der Ansprüche 1 bis 4,
**dadurch gekennzeichnet,**
**dass** der Flanschabschnitt (22) einen radial einwärts ausgreifenden Rastvorsprung (30) aufweist.

6. Übertragungselement nach einem der Ansprüche 1 bis 5,
**dadurch gekennzeichnet,**
**dass** die Innenumfangsfläche des Übertragungsabschnitts (24) in der Form eines Mehrkants ausgebildet ist.

7. Übertragungselement nach einem der Ansprüche 1 bis 6,
**dadurch gekennzeichnet,**
**dass** die Außenumfangsfläche (42) des Übertragungsabschnitts (24) kegelsegmentförmig ausgebildet ist.

8. Übertragungselement nach einem der Ansprüche 1 bis 7,
**dadurch gekennzeichnet,**
**dass** der Neigungswinkel der Außenumfangsfläche (42) des Übertragungsabschnitts (24) relativ zur Mittelachse (44) zwischen 5° und 15°, insbesondere 10° beträgt.

9. Übertragungselement nach einem der Ansprüche 1 bis 8,
**dadurch gekennzeichnet,**
**dass** am dem Flanschabschnitt (22) proximalen Ende des Übertragungsabschnitts (24) und/oder am Brückenabschnitt (28) mindestens eine Öffnung (46) vorgesehen ist.

10. Übertragungselement nach einem der Ansprüche 1 bis 9,
**dadurch gekennzeichnet,**
**dass** die Außenumfangsfläche (34) des Flanschabschnitts (22) an der Stirnseite (32) eine Fase (36) aufweist.

11. Übertragungselement nach einem der Ansprüche 1 bis 10,
**dadurch gekennzeichnet,**
**dass** die Außenumfangsfläche (42) des Übertragungsabschnitts (24) und/oder die Fase (36) des Flanschabschnitts (22) gleitfördernd ausgebildet sind.

12. Übertragungselement nach einem der Ansprüche 5 bis 11,
**dadurch gekennzeichnet,**
**dass** an der Stirnfläche (32) des Flanschabschnitts (22) eine den Rastvorsprung (30) hinterschneidende, insbesondere ringförmige Ausnehmung vorgesehen ist.

13. Übertragungselement nach einem der Ansprüche 5 bis 12,
**dadurch gekennzeichnet,**
**dass** der Rastvorsprung (30) an der der Stirnseite (32) des Flanschabschnitts (22) zugewandten Seite angeschrägt ist.

14. Übertragungselement nach einem der Ansprüche 5 bis 13,
**dadurch gekennzeichnet,**
**dass** die Innenumfangsfläche des Rastvorsprungs (30) in der Form eines Mehrkants ausgebildet ist.

15. Übertragungselement nach einem der Ansprüche 5 bis 14,
**dadurch gekennzeichnet,**
**dass** an der Innenumfangsfläche des Rastvorsprungs (30) mindestens ein Drehsicherungssteg und/oder mindestens eine Drehsicherungswulst vorgesehen sind.

16. Übertragungselement nach einem der Ansprüche 1 bis 15,
**dadurch gekennzeichnet,**
**dass** das Übertragungselement (2) aus einem bis zu einer Temperatur von 95°C, insbesondere 85°C formstabilen, wärmebeständigen Kunststoff, insbesondere aus der Gruppe der Polysulfone oder Polyphenylsulfone, aus der Gruppe der thermisch stabilisierten, insbesondere faserverstärkten Polyamide oder aus Polyvinylidenfluorid gefertigt ist.

17. Anordnung zur Herstellung einer unlösbaren Verbindung,
- mit einem Fitting (4),
- wobei das Fitting (4) einen ein Profil aufweisenden Stützkörper (10) und einen Grundkörper (18) aufweist,
- mit einem Übertragungselement (2) nach einem der Ansprüche 1 bis 16 und
- mit einer Gleithülse (6),
- wobei die Kontur der Innenumfangsfläche (52) der Gleithülse (6) an die Kontur der Außenumfangsfläche (42) des Übertragungsabschnitts (24) angepasst ist,
- wobei das Übertragungselement (2) den Stützkörper (10) und zumindest teilweise den Grundkörper (18) umgreift,
- wobei die Gleithülse (6) teilweise auf den Übertragungsabschnitt (24) aufgeschoben ist, und
- wobei die Innenumfangsfläche (52) der Gleithülse (6) und die Außenumfangsfläche (42) des Übertragungsabschnitts (24) zumindest teilweise in reibschlüssiger Anlage liegen.

18. Anordnung zur Herstellung einer unlösbaren Verbindung nach Anspruch 17,
**dadurch gekennzeichnet,**
**dass** ein an der Innenumfangsfläche des Flanschabschnitts (22) angeordneter Rastvorsprung (30) in eine an der Außenumfangsfläche des Grundkörpers (18) angeordnete Rastnut (20) eingreift.

19. Anordnung zur Herstellung einer unlösbaren Verbindung nach Anspruch 17 oder 18,
**dadurch gekennzeichnet,**
**dass** die Wand (54) der Gleithülse (6) im Querschnitt im Wesentlichen keilförmig ausgebildet ist.

20. Anordnung zur Herstellung einer unlösbaren Verbindung nach einem der Ansprüche 17 bis 19,
**dadurch gekennzeichnet,**
**dass** die Außenumfangsfläche (42) des Übertragungsabschnitts (24) kegelsegmentförmig und die Innenumfangsfläche (52) der Gleithülse (6) in einer daran angepassten Kegelsegmentform ausgebildet sind.

21. Anordnung zur Herstellung einer unlösbaren Verbindung nach einem der Ansprüche 19 bis 20,
**dadurch gekennzeichnet,**
**dass** die Gleithülse (6) an ihrem breiten Ende eine, insbesondere gleitfördernd ausgebildete Fase (58) aufweist.

## Claims

1. A transmission element (2) for workpiece connections to be axially compressed,
- with a flange section (22) having a contact surface for a front face of a pipe, wherein said pipe can be introduced in said transmission element, and wherein said pipe can be pressed with said transmission element, and
- with a transmission section (24),
- wherein the transmission section (24) exhibiting an essentially cylindrical internal peripheral surface, so that a pipe provided for a nondetachable connection is insertable on the transmission section side into the transmission element in a friction-locked manner, and
- wherein the wall thickness of the transmission section (24) tapering from the end proximal to the flange section (22) up to the end distal to the flange section (22) and
- wherein the external peripheral surface of the transmission section (24) is inclined towards the central axis of the transmission element (2), **characterized in that**
- at least one web (50) running in the axial direction is provided on the internal peripheral surface of the transmission section (24).

2. The transmission element according to Claim 1,
**characterized in that** the flange section (22) and the transmission section (24) are implemented in one piece and are connected via a bridge section (28), which is in particular formed by means of a recess (26).

3. The transmission element according to Claim 1,
**characterized in that** the flange section (22) and the transmission section (24) are implemented in two pieces.

4. The transmission element according to Claim 3,
**characterized in that** the flange section (22) and the transmission section (24) are connectable using connection elements, in particular plug connection elements.

5. The transmission element according to one of Claims 1 through 4,
**characterized in that** the flange section (22) has a catch projection (30) extending radially inward.

6. The transmission element according to one of Claims 1 through 5,
**characterized in that** the internal peripheral surface of the transmission section (24) is implemented in the form of a polygon.

7. The transmission element according to one of Claims 1 through 6,
**characterized in that** the external peripheral surface (42) of the transmission section (24) is implemented in the form of a conical segment.

8. The transmission element according to one of Claims 1 through 7,
**characterized in that** the angle of inclination of the external peripheral surface (42) of the transmission section (24) in relation to the central axis (44) is between 5° and 15°, in particular 10°.

9. The transmission element according to one of Claims 1 through 8,
**characterized in that** at least one opening (46) is provided on the end of the transmission section (24) proximal to the flange section (22) and/or on the bridge section (28).

10. The transmission element according to one of Claims 1 through 9,
**characterized in that** the external peripheral surface (34) of the flange section (22) has a chamfer (36) on the front face (32).

11. The transmission element according to one of Claims 1 through 10,
**characterized in that** the external peripheral surface (42) of the transmission section (24) and/or the chamfer (36) of the flange section (22) are implemented as lubricating.

12. The transmission element according to one of Claims 5 to 11,
**characterized in that** a recess which undercuts the catch projection (30), in particular an annular recess, is provided on the front face (32) of the flange section (22).

13. The transmission element according to one of Claims 5 to 12,
**characterized in that** the catch projection (30) is beveled on the side facing toward the front face (32) of the flange section (22).

14. The transmission element according to one of Claims 5 through 13,
**characterized in that** the internal peripheral surface of the catch projection (30) is implemented in the form of a polygon.

15. The transmission element according to one of Claims 5 to 14,
**characterized in that** at least one rotary protection web and/or a least one rotary protection bead are provided on the internal peripheral surface of the catch projection (30).

16. The transmission element according to one of Claims 1 through 15,
**characterized in that** the transmission element (2) is manufactured from a heat-resistant plastic which is dimensionally stable up to a temperature of 95°C, in particular 85°C, in particular from the group polysulfones or polyphenylsulfones, from the group of thermally stabilized, in particular fiber-reinforced polyamides, or from polyvinylidene fluoride.

17. A configuration for producing a nondetachable connection,
- with a fitting (4),
- the fitting (4) exhibiting a support body (10), which has a profile, and a main body (18),
- with a transmission element (2) according to one of Claims 1 through 16and
- with a sliding sleeve (6),
- the contour of the internal peripheral surface (52) of the sliding sleeve (6) being adapted to the contour of the external peripheral surface (42) of the transmission section (24),
- the transmission element (2) encompassing the support body (10) and at least partially encompassing the main body (18),
- the sliding sleeve (6) being partially pushed onto the transmission section (24), and
- the internal peripheral surface (52) of the sliding sleeve (6) and the external peripheral surface (42) of the transmission section (24) being at least partially in friction-locked contact.

18. The configuration for producing a nondetachable connection according to Claim 17,
**characterized in that** a catch projection (30) situated on the internal peripheral surface of the flange section (22) engages in a catch groove (20) situated on the external peripheral surface of the main body (18).

19. The configuration for producing a nondetachable connection according to Claim 17 or 18,
**characterized in that** the wall (54) of the sliding sleeve (6) is implemented as essentially wedge-shaped in cross-section.

20. The configuration for producing a nondetachable connection according to one of Claims 17 through 19,
**characterized in that** the external peripheral surface (42) of the transmission section (24) is implemented in the form of a conical segment and the internal peripheral surface (52) of the sliding sleeve (6) is implemented in a conical segment shape adapted thereto.

21. The configuration for producing a nondetachable connection according to one of Claims 17 through 20,
**characterized in that** the sliding sleeve (6) has a chamfer (58), which is particularly implemented as lubricating, on its wide end.

## Revendications

1. Élément de transfert pour jonction de pièce usinée non détachable, à pression axiale,
- avec une partie de bride (22) présentant une surface d'appui pour une surface frontale d'un tube, qui est introduit dans l'élément de transfert et qui peut être comprimé avec l'élément de transfert, et
- avec une partie de transfert (24),
- où la partie de transfert (24) présente une surface intérieure essentiellement cylindrique, de sorte qu'un tube prévu pour une liaison non détachable peut être introduit par frottement dans l'élément de transfert du côté de la partie de transfert,
- où l'épaisseur de paroi de la partie de transfert (24) diminue de l'extrémité proximale de la partie de bride (22) à l'extrémité distale de la partie de bride (22), et
- où la surface extérieure de la partie de transfert (24) est inclinée en direction de l'axe central de l'élément de transfert (2),
**caractérisé en ce que**
la surface intérieure de la partie de transfert (24) est munie d'au moins une barrette (50) se développant en direction axiale.

2. Élément de transfert selon la revendication 1, **caractérisé en ce que** la partie de bride (22) et la partie de transfert (24) ne font qu'une pièce et sont joints par une partie de pont (28) formée en particulier au moyen d'un évidement (26).

3. Élément de transfert selon la revendication 1, **caractérisé en ce que** la partie de bride (22) et la partie de transfert (24) sont élaborées en deux pièces.

4. Élément de transfert selon la revendication 3, **caractérisé en ce que** la partie de bride (22) et la partie de transfert (24) peuvent être reliées par des éléments de connexion, en particulier des éléments de connexion enfichables.

5. Élément de transfert selon l'une des revendications 1 à 4, **caractérisé en ce que** la partie de bride (22) présente une saillie d'encliquetage (30) s'engrenant de manière radiale vers l'intérieur.

6. Élément de transfert selon l'une des revendications 1 à 5, **caractérisé en ce que** la surface intérieure de la partie de transfert (24) a la forme d'un polygone.

7. Élément de transfert selon l'une des revendications 1 à 6, **caractérisé en ce que** la surface extérieure (42) de la partie de transfert (24) a une forme conique.

8. Élément de transfert selon l'une des revendications 1 à 7, **caractérisé en ce que** l'angle d'inclinaison de la surface extérieure (42) de la partie de transfert (24) par rapport à l'axe central se situe dans l'intervalle allant de 5° à 15°, en particulier à 10°.

9. Élément de transfert selon l'une des revendications 1 à 8, **caractérisé en ce que** sur l'extrémité proximale de la partie de bride (22) de la partie de transfert (24) et/ou sur la partie de pont (28), au moins une ouverture (46) est présente.

10. Élément de transfert selon l'une des revendications 1 à 9, **caractérisé en ce que** la surface extérieure (34) de la partie de bride (22) présente un chanfrein (36) sur la face avant (32).

11. Élément de transfert selon l'une des revendications 1 à 10, **caractérisé en ce que** la surface extérieure (42) de la partie de transfert (24) et/ou du chanfrein de la partie de bride (22) sont glissants.

12. Élément de transfert selon l'une des revendications 5 à 11, **caractérisé en ce que** sur la face avant (32) de la partie de bride (22), une cavité en contre-dépouille de la saillie d'encliquetage (30), en particulier annulaire est prévue.

13. Élément de transfert selon l'une des revendications 5 à 12, **caractérisé en ce que** la saillie d'encliquetage (30) est chanfreinée sur le côté orienté vers la face avant (32) de la partie de bride (22).

14. Élément de transfert selon l'une des revendications 5 à 13, **caractérisé en ce que** la face intérieure de la saillie d'encliquetage (30) a la forme d'un polygone.

15. Élément de transfert selon l'une des revendications 5 à 14, **caractérisé en ce que** sur la face intérieure de la saillie d'encliquetage (30), est prévu au moins une barrette et/ou au moins un bourrelet de blocage de rotation.

16. Élément de transfert selon l'une des revendications 1 à 15, **caractérisé en ce que** l'élément de transfert (2) est élaboré à partir d'une matière plastique résistant à la chaleur, stable à une température de 95°C, en particulier 85°C, par exemple du groupe des polysulfones ou des polyphénylsulfones, du groupe des polyamides stabilisés thermiquement, en particulier renforcés par fibres, ou un poly(fluorure de vinylidène).

17. Dispositif pour la préparation d'une jonction non détachable,
- avec un raccord (4),
- où le raccord (4) présente un corps d'appui (10) présentant un profil, et un corps de base (18),
- avec un élément de transfert (2) selon l'une des revendications 1 à 16, et
- avec une douille coulissante (6),
- où le contour de la surface intérieure (52) de la douille coulissante (6) est ajusté au contour de la surface extérieure (42) de la partie de transfert (24),
- où l'élément de transfert (2) enveloppe la corps d'appui (10) et au moins partiellement, la corps de base (18),
- où la douille coulissante (6) est partiellement poussée sur la partie de transfert (24), et
- où la surface intérieure (52) de la douille coulissante (6) et la surface extérieure (42) de la partie de transfert (24) se trouvent au moins partiellement, en engagement de frottement.

18. Dispositif pour la préparation d'une jonction non détachable selon la revendication 17, **caractérisé en ce qu'**une saillie d'encliquetage (30) agencée sur la surface intérieure de la partie de bride (22) s'engrène dans une encoche d'encliquetage (20) sur la surface extérieure du corps de base (18).

19. Dispositif pour la préparation d'une jonction non détachable selon la revendication 17 ou 18, **caractérisé en ce que** la paroi (54) de la douille coulissante (6) est essentiellement conique en coupe transversale.

20. Dispositif pour la préparation d'une jonction non détachable selon l'une des revendications 17 à 19, **caractérisé en ce que** la surface extérieure (42) de la partie de transfert (24) est conique et la surface intérieure (52) de la douille coulissante (6) a une forme conique y ajustée.

21. Dispositif pour la préparation d'une jonction non détachable selon l'une des revendications 17 à 20, **caractérisé en ce que** la douille coulissante (6) présente sur son extrémité large, un chanfrein (58), en particulier lisse.
